# EUROPÄISCHE PATENTSCHRIFT

(11) **EP 1 279 561 B1**
(45) Veröffentlichungstag und Bekanntmachung des Hinweises auf die Patenterteilung: **31.01.2007**
(21) Anmeldenummer: 02015031.4
(22) Anmeldetag: 05.07.2002
(51) Int. Cl.: B60R 16/02

(54) **Kraftfahrzeug-Schaltmodul**
Switching module for motor vehicles
Module de commutation pour véhicules à moteur

(30) Priorität: 19.07.2001 DE 10134419
(43) Veröffentlichungstag der Anmeldung: 29.01.2003
(73) Patentinhaber: ABB PATENT GmbH, 68526 Ladenburg (DE)
(72) Erfinder: Stoffel, Andreas, 58339 Breckenfeld (DE); Beuter, Richard, Dipl.-Ing., 58840 Plettenberg (DE); Kühne, Viktor, 73441 Bopfingen (DE)
(74) Vertreter: Stornebel, Kai

(56) Entgegenhaltungen:
- WO-A-00/70723
- US-B1- 6 249 060

## Beschreibung

Die Erfindung betrifft ein Kraftfahrzeug-Schaltmodul.

Es ist bekannt, zur Betätigung von elektrischen Verbrauchern in Kraftfahrzeugen elektrische Schaltgeräte einzusetzen. Diese können einzeln oder in Kombination miteinander angeordnet sein.

Das Dokument WO 00/70723 offenbart ein Kraftfahrzeug-Schaltmodul mit mehreren elektrischen Schaltgeräten zur Betätigung elektrischer Verbraucher, mit wenigstens einem Schaltgerätegehäuse, in welchem mehrere elektrische Schaltelemente angeordnet sind, welche jeweils ein bewegliches Kontaktstück aufweisen, wobei
- das Schaltmodul mit einem angeschlossenen Verbrauchernetz ein Bussystem bildet, wobei
- jedes der Schaltgeräte eine elektronische Schaltung aufweist, welche die jeweilige Schaltbetätigung codiert und ein codiertes Signal erzeugt und wobei
- eine Steuereinheit auf das Trägerteil aufgesteckt ist, welche mit Hilfe von Bauelementen die von den Schaltgeräten erzeugten Signale decodiert bzw. codiert bzw. verarbeitet.

Nachteilig im Hinblick auf die Montage solcher Schaltgeräte ist im allgemeinen vergleichsweise komplex hergestellten Leiterplatten der Schaltmodule, die entsprechenden aufwendig zu montieren sind und zudem vergleichsweise häufig bei der Montage beschädigt werden. Zudem weist ein Gehäuse der bekannten Schaltmodule nur eine beschränkte Funktionalität auf, wobei das Gehäuse meist nur als Rahmen und Abdeckung dient.

Darüber hinaus kann auch der rein mechanische Einbau eines solchen Schaltgerätes Probleme bereiten, da möglicherweise beengte Platzverhältnisse bestehen, welche Sonderbauformen voraussetzen.
Vereinzelt wurden zur Montageerleichterung mehrere Schaltgeräte zu Schaltmodulen zusammengefaßt und so als Schaltgerätebaugruppen eingebaut.

Der Erfindung liegt die Aufgabe zugrunde, ein Kraftfahrzeug-Schaltmodul der eingangs genannten Art zu schaffen, welches einfach gestaltet ist und eine leichte Montage der Schaltgeräte sowie des Schaltmoduls ermöglicht.

Diese Aufgabe wird mit den Merkmalen des Anspruchs 1 gelöst.

In vorteilhafter Weiterbildung der Erfindung sind die für das Schaltmodul vorgesehenen Schaltgeräte im wesentlichen baugleich ausgebildet, wobei sie zusätzlich abmessungsgleich ausgebildet sein können.

Gemäß einer bevorzugten Ausführungsform der Erfindung weisen die für das Schaltmodul vorgesehenen Schaltgeräte eine übereinstimmende Anordnung der Anschlußkontakte auf.

Hierbei erweist es sich als vorteilhaft, daß jedes Schaltgerät mit einer Leiterplatte versehen ist, an welcher einerseits die Anschlußkontakte angeschlossen sind und andererseits die Mikrotaster sowie die erwähnte elektronische Schaltung, welche vorzugsweise von wenigstens einem Chipsatz gebildet ist, der zur Codierung der bei der Schaltbetätigung des Schaltgerätes erzeugten Schaltsignale vorgesehen ist.

Die Steuereinheit ist vorzugsweise von wenigstens einem Chipsatz gebildet. Alternativ kann die Steuereinheit auch zentral im Fahrzeug, das heißt, abgesetzt vom Schaltmodul untergebracht sein oder auch in eine übergeordnete Steuereinheit integriert sein. Dies kann zum Beispiel davon abhängen, ob die zu steuernden elektrischen Verbraucher in der Nähe des Schaltmoduls oder davon entfernt untergebracht sind.

Eine weitere Ausgestaltung der Erfindung sieht vor, daß die Anschlußkontakte als Gabelkontakte ausgebildet sind, welche die im Trägerteil befindlichen zugeordneten Leiterschienen zur Kontaktierung übergreifen. Hierdurch, insbesondere wenn die Schenkel der gabelförmigen Kontakte konisch ausgerichtet sind und sich zu ihrer Kontaktbasis hin nähern, ist eine sichere Kontaktierung gewährleistet, durch welche sichergestellt ist, daß es zu keiner Fehlkontaktierung und somit zu Störungen kommt.

Ein wesentlicher Vorteil der vorliegenden Erfindung besteht darin, daß die Gestaltung des Schaltmoduls, das heißt die Formgebung des Trägerteils, anwendungsspezifisch möglich ist und somit eine der jeweiligen Anwendung entsprechende Formgestaltung aufweist. Hierdurch ist ferner sichergestellt, daß das anwendungsspezifisch gestaltete Trägerteil eine der jeweiligen Anwendung entsprechende Anzahl von Steckplätzen für die Schaltgeräte aufweist.

Abhängig von der jeweiligen Bus-Variante, zum Beispiel CAN oder LIN, sind im Trägerteil 3 oder 4 Kontaktleiter angeordnet. Das verwendete Bussystem kann aber auch ein anwenderspezifisches Bussystem sein, bei dem sogenannte ASICs eingesetzt werden, also anwenderspezifische ICs zur Anwendung kommen. Im Schaltgerät befindet sich dann ein ASIC, dem mittels Programmierung seine Adresse bzw. Funktion im Schaltmodul mitgeteilt wird. Die De-Decodierung in der Steuereinheit erfolgt dann im dort befindlichen ASIC. Das Steuerteil kann bei einer solchen Konfiguration die Schnittstelle in einen Standardbus oder das Lastmanagement für die zu steuernden Verbraucher enthalten.

Um den angestrebten vereinfachten Montageablauf zu gewährleisten besitzt die im Trägerteil befindliche Steuereinheit einen Abgangsstecker zur Verbindung mit dem Verbrauchernetz. Vorteilhafterweise besitzt die als Chip ausgebildete Steuereinheit einen Sockel, an den der Abgangsstecker anschließt.

Zur Durchführung der gewünschten Schalthandlungen des erfindungsgemäßen Schaltmoduls ist für jede Schaltfunktion ein mit entsprechend vielen Mikrotastem ausgestaltetes Schaltgerät vorgesehen.

Aufgrund der mit der Erfindung erreichten Vielseitigkeit an Schaltanwendungen kann das Schaltmodul für die Verwendung als Fensterhebertaster vorgesehen sein, wobei es dann 2 oder 4 Mikrotaster, einen Chipsatz zur Signalcodierung sowie eine LED-Widerstands-Kombination als Suchbeleuchtung aufweist.

Für die Verwendung als Drucktaster besitzt das Schaltmodul 1 Mikrotaster, einen Chipsatz zur Signalcodierung, eine LED Widerstands-Kombination als Suchbeleuchtung sowie gegebenenfalls eine weitere LED-Widerstands-Kombination als Funktionsbeleuchtung.

Bei Verwendung für Zentralverriegelungen besitzt das Schaltmodul 2 Mikrotaster, einen Chipsatz zur Signalcodierung sowie eine oder mehrere LED-Widerstands-Kombination als Suchbeleuchtung, Suchbeleuchtungen oder / und Funktionsbeleuchtung.

Bei Verwendung für die Einstellung der Außenspiegel besitzt das Schaltmodul 4 Mikrotaster, einen Chipsatz zur Signalcodierung sowie wenigstens eine LED-Widerstands-Kombination als Such- oder Funktionsbeleuchtung beziehungsweise - beleuchtungen.

Im Sinne einer einfachen und flexibel gestalteten Fertigung ist jedes Gehäuse für die Schaltgeräte sowie für das Trägerteil aus Kunststoff gefertigt.

Die Kontaktleiter in dem Trägerteil sind parallel zueinander angeordnet und wahlweise als Kontaktstreifen, als Schienen oder Draht ausgebildet.

Ferner ist dem Schaltmodul eine anwendungsspezifische Blende zugeordnet, die ihrerseits an die Einbauumgebung angepaßt sein kann. Hierbei ist vorgesehen, daß die dem Trägerteil zugeordnete Blende Ausschnitte aufweist, in welche die Handbetätigungselemente der jeweils vorgesehenen Schaltgeräte eingreifen.

Prinzipiell kann das erfindungsgemäße Schaltmodul für eine Vielzahl von Schaltanwendungen zum Eisatz kommen. So kann unter anderem das Schaltmodul zur Verwendung für Fensterheber, Spiegelverstellung, Zentralverriegelung, Kindersicherung, Fahrwerkseinstellung, Verdeckbetätigung, Schiebedachbetätigung oder Telematik vorgesehen sein.

Diese und weitere vorteilhafte Ausführungsformen und Ausgestaltungen der Erfindung sind Gegenstand der Unteransprüche.

Anhand von in der beigefügten Zeichnung dargestellten Ausführungsbeispielen der Erfindung sollen die Erfindung, vorteilhafte Ausgestaltungen und besondere Vorteile der Erfindung näher erläutert und beschrieben werden.

Es zeigen:
- Fig. 1: eine erste Ansicht auf ein Schaltmodul,
- Fig. 2: eine zweite Ansicht auf das Schaltmodul,
- Fig. 3: eine dritte Ansicht auf das Schaltmodul,
- Fig. 4: eine Ansicht auf ein Trägerteil,
- Fig. 5: eine vergrößerte Darstellung einer Steuereinheit,
- Fig. 6: eine weitere vergrößerte Darstellung der Steuereinheit,
- Fig. 7: einen Ansicht auf einen Ausschnitt des Trägerteils,
- Fig. 8: eine weitere Ansicht auf den Ausschnitt des Trägerteils,
- Fig. 9: eine Darstellung einer Leiterplatte eines Schaltgeräts,
- Fig. 10: eine Darstellung eines Ausschnitts eines weiteren Trägerteils mit alternativer Verbindungsart zu den Einzelgeräten,
- Fig. 11: eine Darstellung eines Zusammenbaus des Schaltgerätes und des weiteren Trägerteils,
- Fig. 12: eine Darstellung eines weiteren Schaltgeräts und
- Fig. 13: eine Darstellung einer Leiterplatte eines Schaltgeräts.

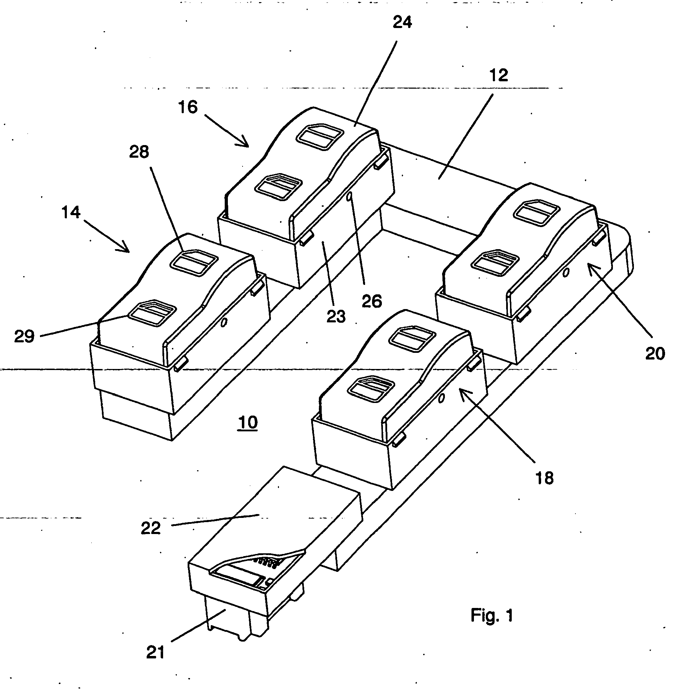

Fig. 1 zeigt eine isometrische Darstellung eines Ausgestaltungsbeispiels eines erfindungsgemäßen elektrischen Schaltmoduls 10. Auf einem beispielsweise im wesentlichen U-förmigen Trägerteil 12 ist ein erstes 14, ein zweites 16, ein drittes 18 sowie ein viertes elektrisches Schaltgerät 20 angeordnet. Einer der beiden Schenkel des Trägerteils 12 ist etwas länger als der andere, wobei an dem längeren Schenkel eine Steuereinheit 22 mit einem Stecker 21 angeordnet ist.

In dieser Figur sind die vier Schaltgeräte 14 bis 20 jeweils gleichartig ausgestaltet und haben die selbe technische Funktion, nämlich das Heben beziehungsweise das Senken von Fenstern in einem Kraftfahrzeug zu bewirken, wobei die Funktion durch die Funktionssymbole 28, 29 auf jedem Schaltgerät dargestellt ist. Die beiden Schaltgeräte 16 und 20, hier für die vorderen Fenster eines Kraftfahrzeuges, können beispielsweise mit einer Komfortschaltung ausgestattet sein, mit der ein vollständiges Heben bzw. Senken des Fensters beim Durchdrücken eines Wippelements 24 ausgelöst wird, dafür ist das jeweilige Schaltgerät 20 mit jeweils 2 Mikrotastern 32, 34 für die Funktionen Heben und Senken bestückt. Dazu weisen die Schaltgeräte 14 bis 20 jeweils ein Schaltgerätegehäuse 23 auf, in welches das Wippelement 24 eingebracht ist, das in einer Lagerung 26 gehalten wird, was jedoch nur beispielhaft an dem zweiten Schaltgerät 16 mit Bezugszeichen angedeutet ist.

Weitere Details und eine genauere Erläuterung des Schaltmoduls 10 folgen in den nachstehenden Figuren.

Die Schaltgeräte bedienen in diesem Beispiel die Fenster des Kraftfahrzeuges. Es ist aber ohne weiteres denkbar, daß die Schaltgeräte mit einer entsprechenden Ausgestaltung auch beispielsweise die Zentralverriegelung, die Spiegelverstellung, die Kindersicherung, die Fahrwerksverstellung, die Verdeck- oder Schiebedachbedienung die Telematik oder ähnliche Funktionen in Kraftfahrzeug bedienen oder ansteuern. Dabei sind diese Funktionen durch im wesentlichen baugleiche Schaltgeräte realisierbar, die auf das entsprechend anwendungsspezifisch gestaltete Trägerteil 12 aufsteckbar sind.

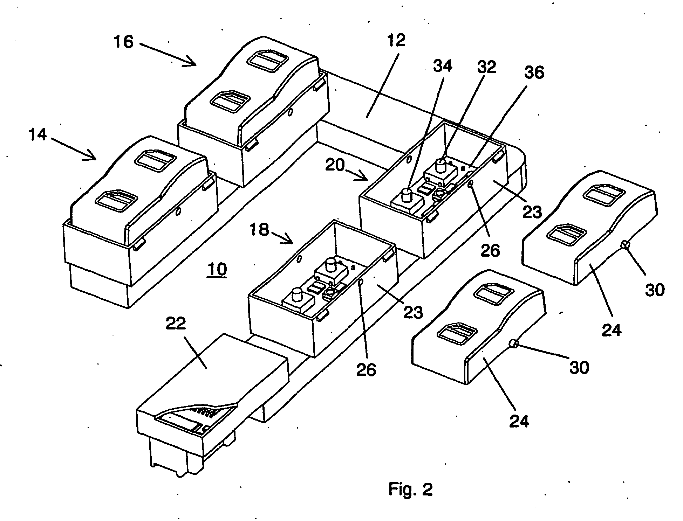

Fig. 2 zeigt wiederum das erfindungsgemäße Schaltmodul 10 in einer vergleichbaren Ansicht, wie in der Fig.1, wobei jedoch die Wippelemente 24 des dritten 18 sowie des vierten Schaltgeräts 20 von den diesen zugeordneten Schaltgerätegehäusen 23 abgenommen sind und seitlich neben das Schaltmodul 10 abgelegt sind.

Hierbei sind an den abgelegten Wippelementen 24 Lagerzapfen 30 erkennbar, die in die Lagerung 26 am Schaltgerätegehäuse 23 im fertig montierten Zustand eingreifen.

Zudem gewährt diese Figur eine Ansicht von schräg oben auf das dritte 18 beziehungsweise das vierte Schaltgerät 20, wobei ein erster 32 sowie ein zweiter Mikroschalter 34 auf einer Leiterplatte 36 angeordnet sind. Diese Elemente sind jedoch nur beispielhaft am vierten Schaltgerät 20 mit Bezugszeichen versehen. Die Mikroschalter weisen ein festes sowie ein bewegliches Kontaktstück auf, wobei dessen Betätigung mittels dem Wippelement 24 erfolgt. Das Wippelement 24 hat eine Ruhestellung, bei der weder der erste 32, noch der zweite Mikroschalter 34 betätigt ist.

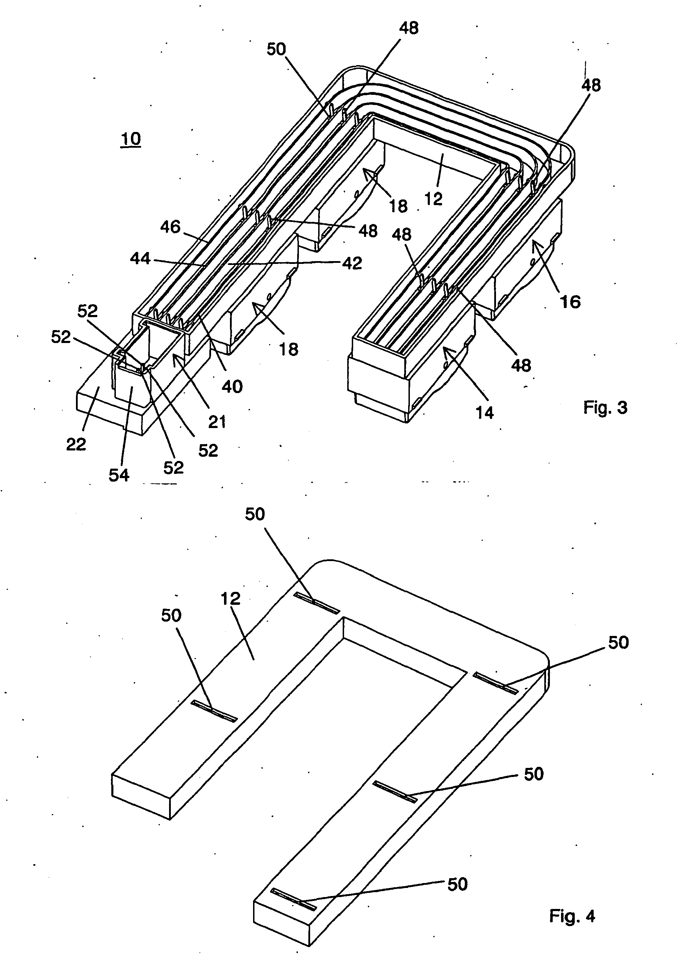

Fig. 3 zeigt das erfindungsgemäße Schaltmodul 10 wiederum in einer isometrischen Darstellung jedoch eine Ansicht schräg von unten. Dabei zeigt die Darstellung, daß das Trägerteil 12 als Hohlprofil ausgebildet ist und in seinem Inneren vier Kontaktleiter 40, 42, 44, 46 angeordnet sind. Eine Anzahl von Anschlußkontakten 48 der vier Schaltgeräte 14 bis 20 sind gezeigt dargestellt, von denen jedoch nur einige beispielhaft mit Bezugszeichen versehen sind, welche Anschlußkontakte 48 jeweils durch eine Ausnehmung 50 im Trägerteil 12 durchgreifen und vier je Schaltgerät 14 bis 20 auf jeweils eine der Kontaktleiter 40 aufgesteckt sind.

Die Anschlußkontakte 48 sind derart ausgebildet, daß diese sich beim Aufstecken selbsttätig an den jeweiligen Kontaktleiter 40 bis 46 anschließen. Zudem weisen alle Schaltgeräte 48 eine gleichartige beziehungsweise eine übereinstimmende Anordnung der Anschlußkontakte 48 auf. Dies erweist sich bei der Herstellung der Ausnehmungen 50 ins Trägerteils 12 sowie der Schaltgeräte 14 bis 20 als vorteilhaft, weil die Zuordnung eines Schaltgerätes 14 bis 20 auf eine bestimmte Position auf dem Trägerteil 12 vermieden ist.

Die Steuereinheit 22 weist ebenfalls vier Anschlußkontakte 48 auf, welche jeweils mit einem Kontaktleiter 40 bis 48 verbunden sind. Zudem sind vier Pins 52 im Stecker 21 angeordnet, die zur elektrischen Verbindung des Schaltmoduls 10 mit einer Stromversorgung beziehungsweise mit einem Bussystem oder Signalleitungen vorgesehen sind. Die Pins 52 sind gerade so lang, daß diese durch eine diese umfassende, etwas höhere Steckerwand 54 gegen Beschädigung geschützt sind.

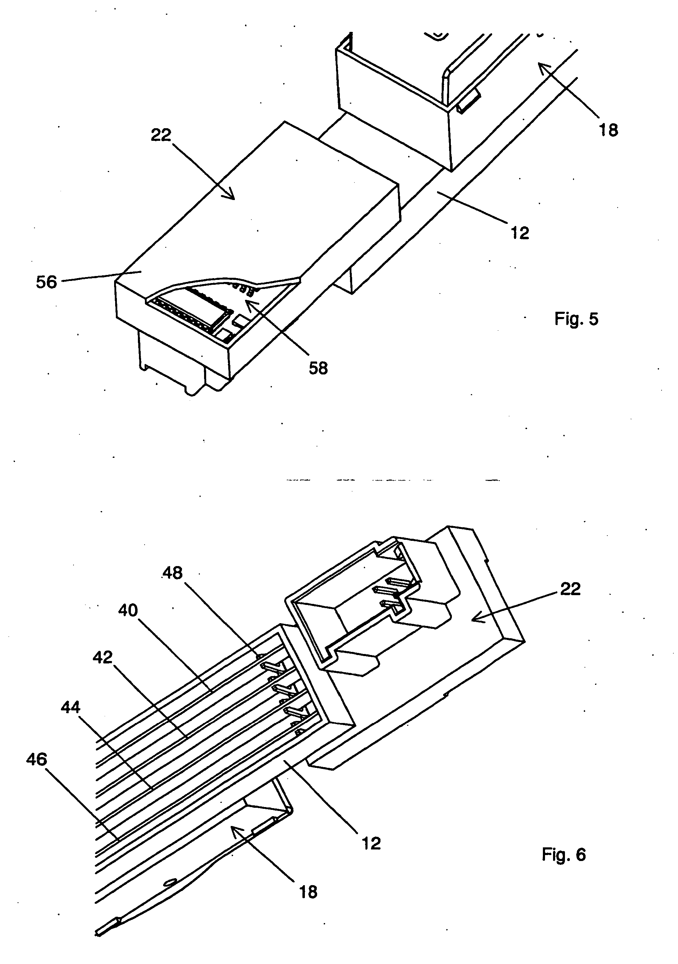

Fig. 4 zeigt das Trägerteil 12 als Einzeldarstellung, bei dem die Ausnehmungen 50 sichtbar sind, die zum Durchführen der jeweiligen Anschlußkontakte 48 vorhanden sind, und zwar sowohl für die Anschlußkontakte 48 der vier Schaltgeräte 14 bis 20, als auch diejenigen der Steuereinheit 22. Ein derart gestaltetes Trägerteil 12 ist besonders günstig herstellbar. Insbesondere die Ausnehmungen 50 können gegebenenfalls noch nachträglich, also nach der Herstellung des Trägerteils 12 selbst, auf einfache Weise angebracht werden, wenngleich eine bevorzugte Herstellung diese Ausnehmungen schon bei der Herstellung des Trägerteils 12 vorsieht.

Fig. 5 zeigt eine vergrößerte Darstellung auf die Steuereinheit 22, die auf das Trägerteil 22 aufgesteckt ist. Zur Verdeutlichung, daß es sich um eine Vergrößerung des Schaltmoduls 10 handelt, ist das dritte Schaltgerät 18 teilweise dargestellt.

In dieser Figur ist ein Bereich eines Schutzgehäuses 56 der Steuereinheit 22 freigeschnitten, so daß die im Schutzgehäuse 56 angeordneten elektronischen Bauelemente 58 sichtbar sind. Die Bauelemente 58 sind dafür vorgesehen, die Codierung beziehungsweise die Dekodierung der Signale von den Schaltgeräten vorzunehmen oder zu verarbeiten. Ein zusätzlicher Vorteil ist es, daß die Steuereinheit auf verschiedene Bussysteme anpaßbar ist, das heißt es können beispielsweise drei- oder 4-polige Bussysteme eingesetzt werden. Derartige zur Zeit übliche Bussysteme im Kraftfahrzeugbaus sind zum Beispiel das System CAN oder LIN.

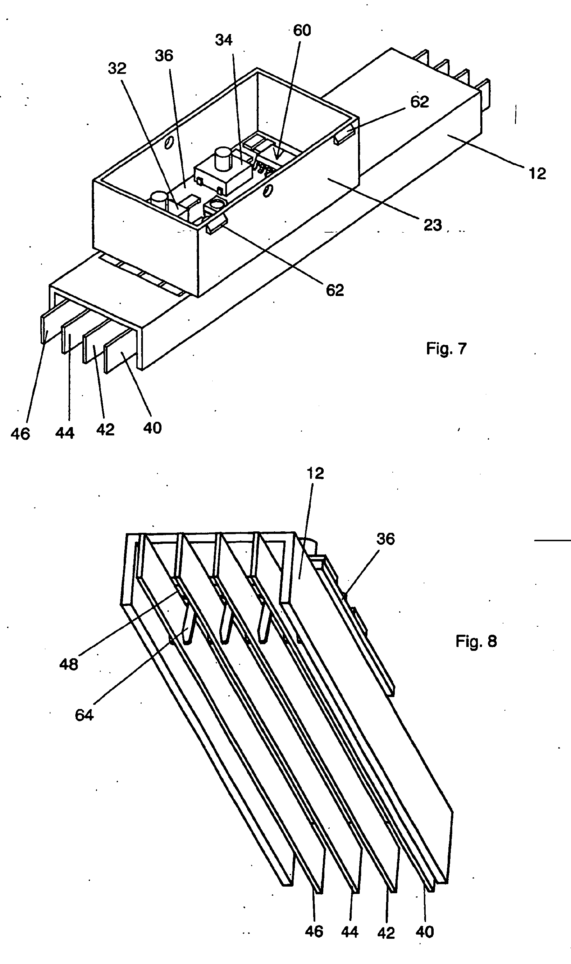

Fig. 6 zeigt eine weiter vergrößerte Darstellung auf die Steuereinheit 22, die auf das Trägerteil 22 aufgesteckt ist, von einer Position schräg unterhalb des Schaltmoduls 10.

Dabei sind die vier, der Steuereinheit 22 zugeordneten Kontaktanschlüsse 48 erkennbar, die jeweils auf einen Kontaktleiter 40 bis 46 gesteckt sind. Jeder Kontaktanschluß 48 ist dabei ein plattenartiges Element, das auf der zum jeweiligen Kontaktleiter 40 bis 46 weisenden Seite mit einem Schlitz versehen ist, der eine Breite aufweist, die ausreicht, einerseits den entsprechenden der Kontaktleiter 40 bis 46 aufzunehmen, andererseits diesen festzuklemmen und derart einen sicheren elektrischen Kontakt zu gewährleisten.

Fig. 7 zeigt eine vergrößere Darstellung eines der Schaltgeräte 14 bis 20, das auf einen Abschnitt des Trägerteils 12 auf dessen Kontaktleiter 40 bis 46 aufgesteckt ist. Das Wippelement 24 ist nicht dargestellt, so daß in der gewählten Ansicht neben den Mikroschaltern 32, 24 auch die Leiterplatte 36 sowie eine auf dieser angeordnete Elektronik 60 erkennbar ist. Die Elektronik 60 ist dafür vorgesehen, eine Signalcodierung durchzuführen beziehungsweise die Schaltvorgaben der Mikroschalter in codierte Signale umzusetzen. Es ist aber auch möglich, beispielsweise in dem Fall, daß eine Schaltgerät 14 bis 20 mit Leuchtkörpern, insbesondere einer Leuchtdiode oder einer Lampe, ausgestaltet ist, daß die Elektronik 60 Signal empfängt und dekodiert, um zum Beispiel die Leuchtkörper an- oder auszuschalten, zum Beispiel für eine Funktionsbeleuchtung.

Des weiteren sind an dem Schaltgerätegehäuse 23 Rastelemente 62 angeordnet, die in einem in der Figur nicht dargestellten Halterahmen auf einfache Weise eingerastet werden. Der Halterahmen ist zum Beispiel bereits mit dem Armaturenbrett eines Kraftfahrzeuges verbunden. Der Einbau des Schaltmoduls ist auf besonders einfache, Montagezeit sparende Weise erreicht. Bei entsprechender Ausgestaltung der Einbaustelle am Kraftfahrzeug kann der Halterahmen sogar vollständig entfallen. Dann wird das erfindungsgemäße Schaltmodul direkt in den zugehörigen Ausschnitt an der Einbaustelle befestigt.

Fig. 8 zeigt eine vergrößerte Ansicht von schräg unten auf das Trägerteil 12 mit den Kontaktleitern 40 bis 46 und mit einem der Schaltgeräte 14 bis 20, das auf das Trägerelement 12 aufgesteckt ist. In dieser Figur ist eine bevorzugte Ausgestaltung der Kontaktanschlüsse 48 mit Gabelkontakten 64 erkennbar. Jeder Kontaktanschluß 48 weist einen Gabelkontakt 64 mit je zwei Zinken auf, die einen Abstand haben, der auf die zwischen den Zinken einzuführenden Kontaktleiter 40 bis 46 angepaßt ist. Die Zinken bilden auf diese Weise eine nutförmige Öffnung, durch die im Bereich des Nutgrundes im montierten Zustand der Kontaktanschluß 48 den betreffenden Kontaktleiter 40 bis 46 fest kontaktiert und derart ein sicherer elektrischer Kontakt hergestellt ist. Die Nut ist im Bereich der zum Kontaktleiter weisenden, offenen Seite aufgeweitet, jedenfalls breiter, als die Breite des Kontaktleiters. Damit ist ein erleichtertes Einführen des Kontaktleiters in den Kontaktanschluß 48 erreicht.

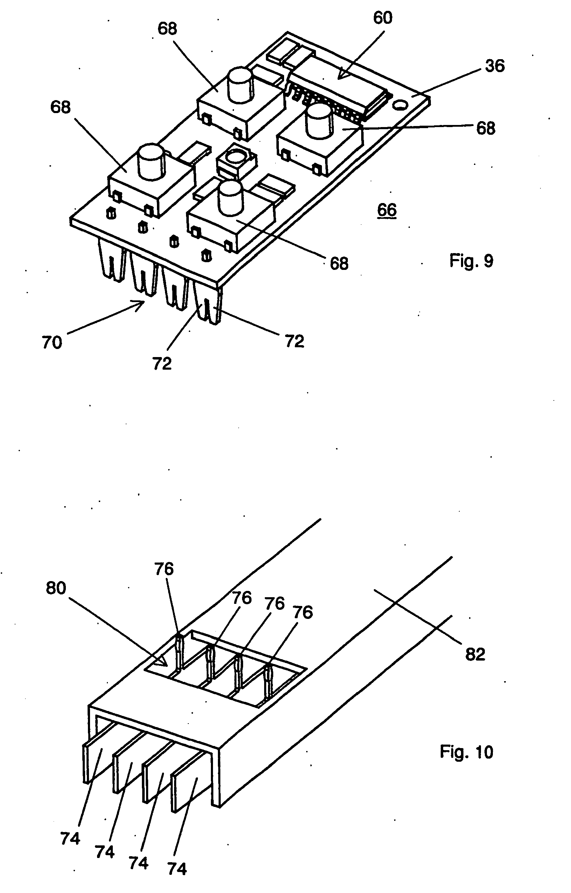

Fig. 9 zeigt eine erste Variante 66 eines Schaltgeräts für ein erfindungsgemäßes Schaltmodul 10, das mit vier Mikroschaltern 68 ausgestaltete ist. Von der ersten Variante 66 sind nur die Leiterplatte 36 mit der Elektronik 60 sowie den weiteren Gabelkontakten 70 dargestellt.

Bei den weiteren Gabelkontakten 70 sind jeweils zwei Gabelzinken 72 vorhanden, die einen Spalt bilden, der an einer Stelle eine ausgeprägte Verjüngung aufweist. Diese Verjüngung ist ungefähr 25 Prozent der Spaltlänge von dessen Öffnung angeordnet. Durch diese Ausgestaltung ist einerseits ein leichtes Einbringen eines Kontaktleiters 40 bis 46 in den Spalt erreichbar, andererseits fixiert ein gewisser Federeffekt der Gabelzinken 72 einen Kontaktleiter 40 bis 46 sicher in dem Spalt.

Fig. 10 zeigt eine weitere Ausgestaltungsmöglichkeit der Verbindung zwischen einer Schaltgeräteeinheit 78 und einem Kontaktleiterband 74. In dieser Fortbildung des Erfindungsgegenstandes ist jedem Kontaktleiterband 74 ein Kontaktstift 76 an der Stelle angeformt, an der eine Schaltgeräteeinheit 78 vorgesehen ist. Die Kontaktstifte 76 sind in einer rechteckigen Ausnehmung 80 eines Hohlprofils 82 angeordnet und reichen durch diese hindurch, so daß die Kontaktstifte 76 auf der dem Kontaktleiterband 74 abgewandten Seite des Hohlprofils 82 überstehen.

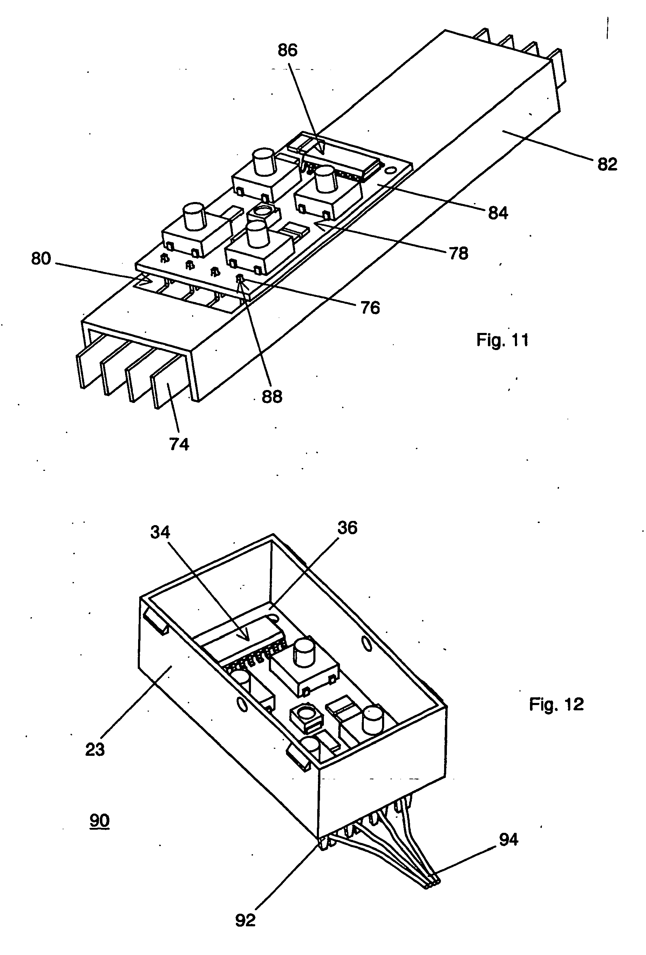

Fig. 11 zeigt eine Ansicht auf dieselbe Anordnung wie Fig. 10 zuvor, jedoch ist auf die Kontaktstifte eine Schaltgeräteeinheit 78 aufgepreßt, von der nur eine Basisplatte 84 und die darauf befindlichen Elektronikbauteile 86 zu sehen sind. Die Kontaktstifte 76 weisen an der, der Schaltgeräteeinheit 78 zugewandten Seite eine Einpreßzone auf, die durch jeweils ein etwas kleineres Loch 88 in der Basisplatte gesteckt oder aufgepreßt werden. Die Abmessungen der Löcher 88 und der Kontaktstifte 76 sind derart aufeinander abgestimmt, daß die Schaltgeräteeinheit 78 einerseits auf die Kontaktstifte aufsteckbar sind, andererseits, die Klemmung zwischen den Elementen ausreicht, um die Schaltgeräteeinheit 78 sicher zu kontaktieren. ,

Fig. 12 zeigt eine zweite Variante 90 einer Schaltgeräteeinheit, die mit Gabelklemmen 92 versehen ist, ansonsten jedoch ähnlich zu einem der Schaltgeräte 14 bis 20 ist, weshalb die entsprechenden Bezugszeichen verwendet wurden. Bei der zweiten Variante 90 ist ein vieradriges Flachbandkabel 94 gezeigt, dessen Adern in je eine Gabelklemme 92 eingepreßt ist.

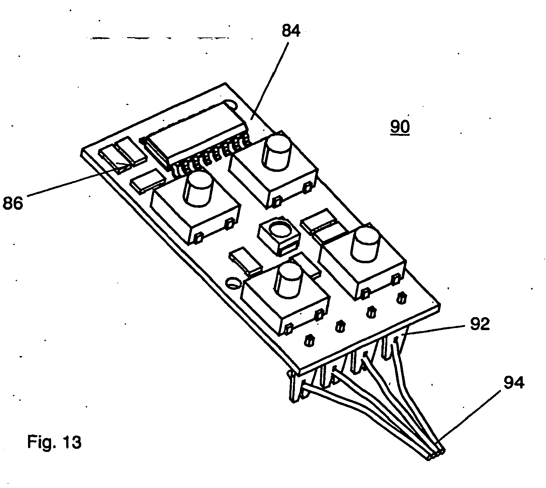

Fig. 13 zeigt die zweite Variante 90 einer Schaltgeräteeinheit, bei der das Flachbandkabel 94 verwendet wird, und bei der zwecks besserer Darstellung des Details der Verbindung zwischen der Basisplatte 84 mit den darauf angeordneten Elektronikbauteilen 86, der Gabelklemmen 92 sowie der Adern des Flachbandkabels 94 zu sehen ist.

## Patentansprüche

1. Kraftfahrzeug-Schaltmodul (10) mit mehreren elektrischen Schaltgeräten (14, 16, 18, 20) zur Betätigung elektrischer Verbraucher, mit wenigstens einem Schaltgerätegehäuse (23), in welchem mehrere elektrische Schaltelemente angeordnet sind, welche jeweils ein bewegliches Kontaktstück aufweisen, das von einem zugeordneten Handbetätigungselement, vorzugsweise einer Taste oder Wippe (24), beaufschlagt ist, welche Taste oder Wippe (24) wenigstens eine Ruhestellung besitzt, sowie mit Anschlußkontakten (48, 70) zum Anschluß an ein Verbrauchernetz, wobei ein Trägerteil (12) vorgesehen ist, an welches die Schaltgeräte (14, 16, 18, 20) ansteckbar sind, wobei das Trägerteil (12) als Hohlprofil ausgebildet ist und in seinem Inneren Kontaktleiter (40, 42, 44, 46) angeordnet sind, an welche die Anschlußkontakte (48, 70) der Schaltgeräte (14, 16, 18, 20) beim Anstecken an das Trägerteil (12) selbsttätig anschließen, wobei das Schaltmodul (10) mit dem angeschlossenen Verbrauchernetz ein Bussystem bildet, wobei jedes der Schaltgeräte (14, 16, 18, 20) eine elektronische Schaltung (60) aufweist, welche die jeweilige Schaltbetätigung codiert und ein codiertes Signal erzeugt und wobei eine Steuereinheit (22) auf das Trägerteil (12) aufgesteckt ist, welche mit Hilfe von Bauelementen (58) die von den Schaltgeräten (14, 16, 18, 20) erzeugten Signale decodiert bzw. codiert bzw. verarbeitet.

2. Kraftfahrzeug-Schaltmodul (10) nach Anspruch 1, **dadurch gekennzeichnet, daß** das elektrische Schaltelement (32, 34) ein Mikrotaster, eine Schaltmatte, eine Schnappscheibe, ein elektronischer Schalter oder ein optischer Schalter ist.

3. Kraftfahrzeug-Schaltmodul (10) nach Anspruch 1 oder 2, **dadurch gekennzeichnet, daß** die Schaltgeräte (14, 16, 18, 20) im wesentlichen baugleich ausgebildet sind.

4. Kraftfahrzeug-Schaltmodul (10) nach einem der vorherigen Ansprüche, **dadurch gekennzeichnet, daß** die Schaltgeräte (14, 16, 18, 20) abmessungsgleich ausgebildet sind.

5. Kraftfahrzeug-Schaltmodul (10) nach Anspruch 3, **dadurch gekennzeichnet, daß** die für das Schaltmodul vorgesehenen Schaltgeräte (14, 16, 18, 20) eine übereinstimmende Anordnung der Anschlußkontakte (48) aufweisen.

6. Kraftfahrzeug-Schaltmodul (10) nach einem der vorherigen Ansprüche, **dadurch gekennzeichnet, daß** die Anschlußkontakte (48) als Gabelkontakte ausgebildet sind, welche die im Trägerteil (10) befindlichen zugeordneten Leiterschienen (40, 42, 44, 46) zur Kontaktierung übergreifen.

7. Kraftfahrzeug-Schaltmodul (10) nach einem der vorherigen Ansprüche, **dadurch gekennzeichnet, daß** das Trägerteil (12) anwendungsspezifisch gestaltet ist und eine der jeweiligen Anwendung entsprechende Formgestaltung aufweist.

8. Kraftfahrzeug-Schaltmodul (10) nach einem der vorherigen Ansprüche, **dadurch gekennzeichnet, daß** das Trägerteil (12) anwendungsspezifisch gestaltet ist und eine der jeweiligen Anwendung entsprechende Anzahl von Steckplätzen (50) für die Schaltgeräte (14, 16, 18, 20) aufweist.

9. Kraftfahrzeug-Schaltmodul (10) nach einem der vorherigen Ansprüche, **dadurch gekennzeichnet, daß** im Trägerteil (12) abhängig von der jeweiligen Bus-Variante, zum Beispiel CAN, LIN oder ein anwendungsspezifisches Bussystem, insbesondere sogenannte ASICs, 3 oder 4 Kontaktleiter (40, 42, 44, 46, 74) angeordnet sind.

10. Kraftfahrzeug-Schaltmodul (10) nach einem der vorherigen Ansprüche, **dadurch gekennzeichnet, daß** die Steuereinheit (22) einen Abgangsstecker (21) zur Verbindung mit dem Verbrauchernetz aufweist.

11. Kraftfahrzeug-Schaltmodul (10) nach Anspruch 10, **dadurch gekennzeichnet, daß** die Steuereinheit (22) als Chip ausgebildet ist und einen Sockel besitzt, an den der Abgangsstecker (21) anschließt.

12. Kraftfahrzeug-Schaltmodul (10) nach Anspruch 10, **dadurch gekennzeichnet, daß** die Steuereinheit (22) einen Chipsatz und einen Sockel mit angeformtem Abgangsstecker (21) besitzt.

13. Kraftfahrzeug-Schaltmodul (10) nach einem der vorherigen Ansprüche, **dadurch gekennzeichnet, daß** für jede Schaltfunktion ein mit wenigstens einem Mikrotaster (32, 34) versehenes Schaltgerät (14, 16, 18, 20) vorgesehen ist.

14. Kraftfahrzeug-Schaltmodul (10) nach Anspruch 13, **dadurch gekennzeichnet, daß** jedes Schaltgerät (14, 16, 18, 20) mit einer Leiterplatte versehen ist, an welcher einerseits die Anschlußkontakte (48, 76) angeschlossen sind, und andererseits die Mikrotaster (32, 34) und wenigstens ein Chipsatz (60) zur Codierung der Schaltsignale.

15. Kraftfahrzeugeschaltmodul (10) nach einem der Ansprüche 13 oder 14, **dadurch gekennzeichnet, daß** jedes Schaltgerät (14, 16, 18, 20) für die Verwendung als Fensterhebertaster 2 oder 4 Mikrotaster (32, 34), einen Chipsatz (60) zur Signalcodierung sowie wenigstens eine LED-Widerstands-Kombination als Such- oder Funktionsbeleuchtung aufweist.

16. Kraftfahrzeug-Schaltmodul (10) nach einem der Ansprüche 13 oder 14, **dadurch gekennzeichnet, daß** jedes Schaltgerät (14, 16, 18, 20) für die Verwendung als Drucktaster 1 Mikrotaster (32, 34), einen Chipsatz (60) zur Signalcodierung sowie wenigstens eine LED-Widerstands-Kombination als Such- oder Funktionsbeleuchtung aufweist.

17. Kraftfahrzeug-Schaltmodul (10) nach einem der Ansprüche 13 oder 14, **dadurch gekennzeichnet, daß** jedes Schaltgerät (14, 16, 18, 20) bei Verwendung für Zentralverriegelungen 2 Mikrotaster (32, 34), einen Chipsatz (60) zur Signalcodierung sowie wenigstens eine LED-Widerstands-Kombination als Such- oder Funktionsbeleuchtung aufweist.

18. Kraftfahrzeug-Schaltmodul (10) nach einem der Ansprüche 13 oder 14, **dadurch gekennzeichnet, daß** jedes Schaltgerät (14, 16, 18, 20) bei Verwendung für die Einstellung der Außenspiegel 4 Mikrotaster (32, 34), einen Chipsatz (60) zur Signalcodierung sowie wenigstens eine LED-Widerstands-Kombination als Such- oder Fuhktionsbeleuchtung aufweist.

19. Kraftfahrzeug-Schaltmodul (10) nach einem der vorherigen Ansprüche, **dadurch gekennzeichnet, daß** jedes Gehäuse (23) für die Schaltgeräte (14, 16, 18, 20) sowie für das Trägerteil (12) aus Kunststoff gefertigt ist.

20. Kraftfahrzeug-Schaltmodul (10) nach einem der vorherigen Ansprüche, **dadurch gekennzeichnet, daß** der Trägerteil (12) eine im wesentlichen flächige, insbesondere U-förmige Ausgestaltung aufweist.

21. Kraftfahrzeug-Schaltmodul (10) nach einem der vorstehenden Ansprüche, **dadurch gekennzeichnet, daß** der Trägerteil (12) eine im wesentlichen räumliche Ausgestaltung aufweist.

22. Kraftfahrzeug-Schaltmodul (10) nach einem der vorherigen Ansprüche, **dadurch gekennzeichnet, daß** die Kontaktleiter (40, 42, 44, 46, 74) in dem Trägerteil (12, 82) parallel zueinander angeordnet sind.

23. Kraftfahrzeug-Schaltmodul (10) nach einem der vorgenannten Ansprüche, **dadurch gekennzeichnet, daß** die Kontaktleiter (40, 42, 44, 46, 70) eine quadratischen, einen rechteckigen oder kreisförmigen Querschnittsfläche senkrecht zur Längsrichtung betrachtet haben.

24. Kraftfahrzeug-Schaltmodul (10) nach einem der vorherigen Ansprüche, **dadurch gekennzeichnet, daß** jedem Schaltmodul (10) eine anwendungsspezifische Blende zugeordnet ist.

25. Kraftfahrzeug-Schaltmodul (10) nach Anspruch 24, **dadurch gekennzeichnet, daß** die dem Trägerteil (12, 82) zugeordnete Blende Ausschnitte aufweist, in welche die Handbetätigungselemente (24) der jeweils vorgesehenen Schaltgeräte (14, 16, 18, 20) eingreifen.

26. Kraftfahrzeug-Schaltmodul (10) nach einem der vorherigen Ansprüche, **dadurch gekennzeichnet, daß** unter anderem das Schaltmodul (10) zur Verwendung für Fensterheber, Spiegelverstellung, Zentralverriegelung, Kindersicherung, Fahrwerkseinstellung, Verdeckbetätigung, Schiebedachbetätigung oder Telematik vorgesehen ist.

27. Kraftfahrzeug-Schaltmodul (10) nach einem der vorherigen Ansprüche, **dadurch gekennzeichnet, daß** an den Kontaktleitern (74) Stiftkontakte (76) angeformt sind, welche mit als Ausnehmungen (88) ausgebildete Anschlußkontakte zusammenarbeiten.

28. Kraftfahrzeug-Schaltmodul (10) nach Anspruch 27, **dadurch gekennzeichnet, daß** die Stiftkontakte (76) mit den durchkontaktierten Ausnehmungen (88) in einer Leiterplatte (36) im Eingriff sind und eine elektrische Verbindung hergestellt ist.

29. Kraftfahrzeug-Schaltmodul (90) nach Anspruch 28, **dadurch gekennzeichnet, daß** die Ausnehmungen (88) auf einer Platine (84) angeordnet sind, welche als Basisplatte des wenigstens einen Schaltgerätes (78) dient.

30. Kraftfahrzeug-Schaltmodul (90) nach Anspruch 29, **dadurch gekennzeichnet, daß** die Ausnehmungen (88) Bohrungen sind.

31. Kraftfahrzeug-Schaltmodul (90) nach einem der vorherigen Ansprüche, **dadurch gekennzeichnet, daß** die Anschlußkontakte (92) als Gabelklemmen ausgebildet sind, in welche Adern eines Flachbandkabels (94) eingepreßt sind, und daß eine elektrischer Kontakt zwischen der betreffenden Ader und der entsprechenden Gabelklemme hergestellt ist.

32. Kraftfahrzeug-Schaltmodul nach Anspruch 31, **dadurch gekennzeichnet, daß** das Flachbandkabel im Trägerteil (12) zu dem wenigstens einen Schaltgerät (14, 16, 18, 20) geführt ist.

## Claims

1. Motor-vehicle switching module (10) having a plurality of electrical switching devices (14, 16, 18, 20) for actuating electrical loads, having at least one switching device housing (23), in which a plurality of electrical switching elements are arranged which each have a moveable contact piece, which is acted upon by an associated manual actuation element, preferably a pushbutton or rocker button (24), which pushbutton or rocker button (24) has at least one rest position, and having connection contacts (48, 70) for connection to a load network, a carrier part (12) being provided, to which the switching devices (14, 16, 18, 20) can be plugged, the carrier part (12) being in the form of a hollow profile, and, in its interior, contact conductors (40, 42, 44, 46) being arranged to which the connection contacts (48, 70) of the switching devices (14, 16, 18, 20) are automatically connected when they are plugged onto the carrier part (12), the switching module (10) with the connected load network forming a bus system, each of the switching devices (14, 16, 18, 20) having an electronic circuit (60) which encodes the respective switching actuation and produces an encoded signal, and a control unit (22) being plugged onto the carrier part (12), which control unit decodes or encodes or processes the signals produced by the switching devices (14, 16, 18, 20) with the aid of components (58).

2. Motor-vehicle switching module (10) according to Claim 1, **characterized in that** the electrical switching element (32, 34) is a micro pushbutton, a switching pad, a snap-action disc, an electronic switch or an optical switch.

3. Motor-vehicle switching module (10) according to Claim 1 or 2, **characterized in that** the switching devices (14, 16, 18, 20) have an essentially identical design.

4. Motor-vehicle switching module (10) according to one of the preceding claims, **characterized in that** the switching devices (14, 16, 18, 20) are designed to have identical dimensions.

5. Motor-vehicle switching module (10) according to Claim 3, **characterized in that** the switching devices (14, 16, 18, 20) provided for the switching module have a corresponding arrangement of the connection contacts (48).

6. Motor-vehicle switching module (10) according to one of the preceding claims, **characterized in that** the connection contacts (48) are in the form of fork contacts, which engage around the associated conductor rails (40, 42, 44, 46) located in the carrier part (12) so as to make contact.

7. Motor-vehicle switching module (10) according to one of the preceding claims, **characterized in that** the carrier part (12) has an application-specific design and has a shape which corresponds to the respective application.

8. Motor-vehicle switching module (10) according to one of the preceding claims, **characterized in that** the carrier part (12) has an application-specific design and has a number of slots (50) for the switching devices (14, 16, 18, 20) which corresponds to the respective application.

9. Motor-vehicle switching module (10) according to one of the preceding claims, **characterized in that**, depending on the respective bus variant, for example CAN, LIN or an application-specific bus system, in particular so-called ASICs, 3 or 4 contact conductors (40, 42, 44, 46, 74) are arranged in the carrier part (12).

10. Motor-vehicle switching module (10) according to one of the preceding claims, **characterized in that** the control unit (22) has an outgoing feeder plug (21) for connection to the load network.

11. Motor-vehicle switching module (10) according to Claim 10, **characterized in that** the control unit (22) is in the form of a chip and has a base, to which the outgoing feeder plug (21) is connected.

12. Motor-vehicle switching module (10) according to Claim 10, **characterized in that** the control unit (22) has a set of chips and a base having an integrally formed outgoing feeder plug (21).

13. Motor-vehicle switching module (10) according to one of the preceding claims, **characterized in that** a switching device (14, 16, 18, 20) which is provided with at least one micro pushbutton (32, 34), is provided for each switching function.

14. Motor-vehicle switching module (10) according to Claim 13, **characterized in that** each switching device (14, 16, 18, 20) is provided with a printed circuit board, to which, on the one hand, the connection contacts (48, 76) are connected and, on the other hand, the micro pushbutton (32, 34) and at least one set of chips (60) for encoding the switching signals.

15. Motor-vehicle switching module (10) according to either of Claims 13 and 14, **characterized in that** each switching device (14, 16, 18, 20) has, for the use as a window drive pushbutton, 2 or 4 micro pushbuttons (32, 34), a set of chips (60) for encoding signals and at least one LED/resistor combination as orientational or functional lighting.

16. Motor-vehicle switching module (10) according to either of Claims 13 and 14, **characterized in that** each switching device (14, 16, 18, 20) has, for the use as a pressure-actuated button, 1 micro pushbutton (32, 34), a set of chips (60) for encoding signals and at least one LED/resistor combination as orientational or functional lighting.

17. Motor-vehicle switching module (10) according to either of Claims 13 and 14, **characterized in that** each switching device (14, 16, 18, 20), when used for central locking systems, has 2 micro pushbuttons (32, 34), a set of chips (60) for encoding signals and at least one LED/resistor combination as orientational or functional lighting.

18. Motor-vehicle switching module (10) according to either of Claims 13 and 14, **characterized in that** each switching device (14, 16, 18, 20), when used for adjusting the external mirrors, has 4 micro pushbuttons (32, 34), a set of chips (60) for encoding signals and at least one LED/resistor combination as orientational or functional lighting.

19. Motor-vehicle switching module (10) according to one of the preceding claims, **characterized in that** each housing (23) for the switching devices (14, 16, 18, 20) and for the carrier part (12) is manufactured from plastic.

20. Motor-vehicle switching module (10) according to one of the preceding claims, **characterized in that** the carrier part (12) has an essentially flat, in particular U-shaped design.

21. Motor-vehicle switching module (10) according to one of the preceding claims, **characterized in that** the carrier part (12) has an essentially three-dimensional design.

22. Motor-vehicle switching module (10) according to one of the preceding claims, **characterized in that** the contact conductors (40, 42, 44, 46, 74) are arranged parallel to one another in the carrier part (12, 82).

23. Motor-vehicle switching module (10) according to one of the preceding claims, **characterized in that** the contact conductors (40, 42, 44, 46, 70) have a square, a rectangular or a circular cross-sectional area, when viewed at right angles with respect to the longitudinal direction.

24. Motor-vehicle switching module (10) according to one of the preceding claims, **characterized in that** an application-specific cover is associated with each switching module (10).

25. Motor-vehicle switching module (10) according to Claim 24, **characterized in that** the cover associated with the carrier part (12, 82) has cutouts, in which the manual actuation elements (24) of the respectively provided switching devices (14, 16, 18, 20) engage.

26. Motor-vehicle switching module (10) according to one of the preceding claims, **characterized in that**, inter alia, the switching module (10) is envisaged for use for window drives, mirror adjustment, central locking, child safety locks, chassis adjustment, hood actuation, sunroof actuation or communication.

27. Motor-vehicle switching module (10) according to one of the preceding claims, **characterized in that** pin contacts (76) are integrally formed on the contact conductors (74) and interact with connection contacts in the form of recesses (88).

28. Motor-vehicle switching module (10) according to Claim 27, **characterized in that** the pin contacts (76), with the through-plated recesses (88), engage in a printed circuit board (36), and an electrical connection is produced.

29. Motor-vehicle switching module (90) according to Claim 28, **characterized in that** the recesses (88) are arranged on a board (84), which acts as a base plate for the at least one switching device (78).

30. Motor-vehicle switching module (90) according to Claim 29, **characterized in that** the recesses (88) are drilled holes.

31. Motor-vehicle switching module (90) according to one of the preceding claims, **characterized in that** the connection contacts (92) are in the form of fork terminals, into which cores of a flat ribbon cable (94) are pressed, and **in that** an electrical contact is produced between the core in question and the corresponding fork terminal.

32. Motor-vehicle switching module according to Claim 31, **characterized in that** the flat ribbon cable is passed, in the carrier part (12), to the at least one switching device (14, 16, 18, 20).

## Revendications

1. Module de commutation (10) pour véhicule à moteur comprenant plusieurs dispositifs de commutation (14, 16, 18, 20) pour actionner des consommateurs électriques comportant au moins un boîtier (24) de dispositifs de commutation, dans lequel sont disposés plusieurs éléments électriques de commutation, qui présentent chacun une pièce de contact mobile qui est sollicitée par un élément d'actionnement manuel, de préférence une touche ou un bouton basculant comportant au moins une position de repos, ainsi que des contacts de connexion (48, 70) pour être connectés à un réseau de consommateurs, dans lequel est prévu une partie de support (12) sur lequel les dispositifs de commutation (14, 16, 18, 20) peut être enfichés, la partie de support (12) étant réalisée sous forme de profil creux à l'intérieur duquel sont disposés des conducteurs de contact (40, 42, 44, 46) qui sont automatiquement raccordés aux contacts de connexion (48, 70) des dispositifs de commutation (14, 16, 18, 20) lors de leur enfichage sur la partie de support (12), dans lequel le module de commutation (10) forme un système de bus avec le réseau de consommateurs raccordé, chacun des dispositifs de commutation(14, 16, 18, 20) présente un circuit électrique (60) qui code chaque actionnement de commutation et délivre un signal codé et dans lequel une unité de commande (22) est enfichée sur la partie de support (12) qui décode, code, ou traite au moyen de composants (58) les signaux délivrés par les dispositifs de commutation (14, 16, 18, 20).

2. Module de commutation (10) selon la revendication 1, **caractérisé en ce que** l'élément de commutation électrique (32, 34) est une microtouche, natte de commutation, disque encliquetable, commutateur électronique ou commutateur optique.

3. Module de commutation (10) selon la revendication 1 ou 2, **caractérisé en ce que** les dispositifs de commutation (14, 16, 18, 20) sont réalisés pour l'essentiel en tant que composants identiques.

4. Module de commutation (10) selon l'une des revendications précédentes, **caractérisé en ce que** les dispositifs de commutation (14, 16, 18, 20) sont réalisés avec des dimensions identiques.

5. Module de commutation (10) selon la revendication 3, **caractérisé en ce que** les dispositifs de commutation (14, 16, 18, 20) prévus pour le module de commutation présentent une disposition adaptée des contacts de connexion (48).

6. Module de commutation (10) selon l'une des revendications précédentes, **caractérisé en ce que** les contacts de connexion (48) sont réalisés sous forme de contacts en fourche, qui viennent en prise pour établir le contact, avec les barres conductrices (40, 42, 44, 46) correspondantes situées dans la partie de support (10).

7. Module de commutation (10) selon l'une des revendications précédentes, **caractérisé en ce que** la partie de support (12) est conçue spécifiquement pour l'utilisation et présente une conception de forme correspondant à chacune des utilisations.

8. Module de commutation (10) selon l'une des revendications précédentes, **caractérisé en ce que** la partie de support (12) est conçue spécifiquement pour l'utilisation et présente pour l'une de chacune de ses utilisations un nombre correspondant d'emplacements (50) pour enficher les dispositifs de commutation (14, 16, 18, 20).

9. Module de commutation (10) selon l'une des revendications précédentes, **caractérisé en ce que** 3 ou 4 contacts conducteurs (40, 42, 44, 46, 74) sont disposés dans la partie de support (12) suivant la variante de bus respective, telle que CAN, LIN ou un système de bus spécifique pour l'utilisation, en particulier celui appelé ASICS.

10. Module de commutation (10) selon l'une des revendications précédentes, **caractérisé en ce que** l'unité de commande (22) présente une fiche de départ (21) pour la liaison avec le réseau de consommateurs.

11. Module de commutation (10) selon la revendication 10, **caractérisé en ce que** l'unité de commande (22) est réalisée sous forme de chip et présente une prise à laquelle la fiche de départ (21) est reliée.

12. Module de commutation (10) selon la revendication 10, **caractérisé en ce que** l'unité de commande (22) comprend un jeu de chips et une prise avec une fiche de départ (21) formée sur celle-ci.

13. Module de commutation (10) selon l'une des revendications précédentes, **caractérisé en ce que** pour chaque fonction de commutation est prévu un dispositif de commutation (14, 16, 18, 20) avec au moins une microtouche (32, 34).

14. Module de commutation (10) selon la revendication 13, **caractérisé en ce que** chaque dispositif de commutation (14, 16, 18, 20) est pourvu d'une plaque conductrice, à laquelle sont raccordés d'une part les contacts de connexion (48, 76) et d'autre part les microtouches (32, 34) et au moins un jeu de chips (60) pour coder le signal de commutation.

15. Module de commutation (10) selon l'une des revendications 13 ou 14, **caractérisé en ce que** chaque dispositif de commutation (14, 16, 18, 20) comporte pour son utilisation en tant que touche de lève-vitre 2 ou 4 microtouches (32, 34) un jeu de chips (60) pour le codage de signal ainsi qu'au moins une combinaison de LED (diode électroluminescente) et de résistance en tant que telle ou en tant que fonction d'éclairage.

16. Module de commutation (10) selon l'une des revendications 13 ou 14, **caractérisé en ce que** chaque dispositif de commutation (14, 16, 18, 20) comporte pour son utilisation en tant que bouton poussoir, une microtouche (32, 34) un jeu de chips (60) pour le codage de signal ainsi qu'au moins une combinaison de LED et de résistance en tant que telle ou en tant que fonction d'éclairage.

17. Module de commutation (10) selon l'une des revendications 13 ou 14, **caractérisé en ce que** chaque dispositif de commutation (14, 16, 18, 20) comporte pour son utilisation dans le verrouillage centralisé 2 microtouches (32, 34), un jeu de chips (60) pour le codage de signal ainsi qu'au moins une combinaison de LED et de résistance en tant que telle ou en tant que fonction d'éclairage.

18. Module de commutation (10) selon l'une des revendications 13 ou 14, **caractérisé en ce que** chaque dispositif de commutation (14, 16, 18, 20) comporte pour son utilisation pour le réglage des rétroviseurs extérieurs 4 microtouches (32, 34).

19. Module de commutation (10) selon l'une des revendications précédentes, **caractérisé en ce que** chacun des boîtiers (23) pour les dispositifs de commutation (14, 16, 18, 20) ainsi que pour la partie de support (12) est réalisé en matière synthétique.

20. Module de commutation (10) selon l'une des revendications précédentes, **caractérisé en ce que** la pièce support (12) présente une conformation sensiblement plate notamment en forme de U.

21. Module de commutation (10) selon l'une des revendications précédentes, **caractérisé en ce que** la pièce de support (12) présente une conformation sensiblement tridimensionnelle.

22. Module de commutation (10) selon l'une des revendications précédentes, **caractérisé en ce que** les contacts conducteurs (40, 42, 44, 46, 74) sont disposés dans la pièce de support (12, 82) sensiblement parallèlement les uns aux autres.

23. Module de commutation (10) selon l'une des revendications précédentes, **caractérisé en ce que** les contacts conducteurs (40, 42, 44, 46, 74) présentent une section transversale, quadratique, rectangulaire ou circulaire perpendiculairement à la longueur.

24. Module de commutation (10) selon l'une des revendications précédentes, **caractérisé en ce que** qu'à chaque module de commutation (10) est associé un capot spécifique de l'utilisation.

25. Module de commutation (10) selon la revendication 24, **caractérisé en ce que** le capot associé à la partie de support (12, 82) présente des découpes, dans lesquelles sont engagés les éléments d'actionnement manuels (24) de chacun des dispositifs de commutation (14, 16, 18, 20) prévus.

26. Module de commutation (10) selon l'une des revendications précédentes, **caractérisé en ce que** le module de commutation (10) est prévu pour son utilisation entre autres dans les lève-vitres, le réglage de rétroviseurs, le verrouillage centralisé, la sécurité enfants, le réglage du mécanisme de déplacement, l'actionnement du toit, l'actionnement du toit ouvrant ou la télécommunication.

27. Module de commutation (10) selon l'une des revendications précédentes, **caractérisé en ce que** des contacts en forme de tiges (76) sont formés sur les conducteurs de contact (74) qui coopèrent avec des contacts de connexion réalisés sous forme d'évidements (88).

28. Module de commutation (10) selon la revendication 27, **caractérisé en ce que** les contacts en forme de tiges (76) sont en prise avec une plaque conductrice (36) au moyen des évidements (88) qu'ils traversent, pour établir une liaison électrique.

29. Module de commutation (90) selon la revendication 28, **caractérisé en ce que** les évidements (88) sont agencés sur une platine de base pour au moins un dispositif de commutation (78).

30. Module de commutation (90) selon la revendication 29, **caractérisé en ce que** les évidements (88) sont des perçages.

31. Module de commutation (90) selon l'une des revendications précédentes, **caractérisé en ce que** les contacts de connexion (92) sont réalisés sous forme de fourches de serrage, dans lesquelles sont pressés des fils d'un câble en forme de bande plate (94) et **en ce qu'**un contact électrique est établi entre le fil concerné et la fourche de serrage correspondante.

32. Module de commutation selon la revendication 31, **caractérisé en ce que** le câble en forme de bande plate est guidé dans la partie support (12) vers au moins un dispositif de commutation (14, 16, 18, 20).
